# EUROPEAN PATENT SPECIFICATION

(11) **EP 2 053 210 B1**
(45) Date of publication and mention of the grant of the patent: **09.06.2010**
(21) Application number: 08167278.4
(22) Date of filing: 22.10.2008
(51) Int. Cl.: F01N 3/04, B01D 47/02, A47L 9/18

(54) **Exhaust gas cleaning device particularly suited to be used in internal combustion engines.**
Abgasreinigungsvorrichtung besonders geeignet für den Gebrauch in Brennkraftmaschinen
Dispositif pour la purification de gaz d'échappement en particulier pour utilisation dans des moteurs à combustion interne

(30) Priority: 22.10.2007 IT VI20070284
(43) Date of publication of application: 29.04.2009
(73) Proprietor: Nicoli, Gianluigi, 36031 Dueville (VI) (IT); Piva, Claudio, 36066 Sandrigo (VI) (IT)
(72) Inventor: Nicoli, Gianluigi, 36031 Dueville (VI) (IT); Piva, Claudio, 36066 Sandrigo (VI) (IT)
(74) Representative: Bonini, Ercole

(56) References cited:
- EP-A- 1 122 105
- CA-A1- 2 390 316
- GB-A- 2 170 423
- US-A1- 2005 072 299

## Description

The invention concerns an exhaust gas cleaning device particularly suited to be used as an exhaust silencer in vehicles with internal combustion engine.

It is known that modern internal combustion engines are generally provided with a catalytic converter that has the function of filtering the exhaust gases sent out by the engine.

The cleaning effect of catalytic silencers is, however, quite limited, so that large quantities of polluting gases are released in the atmosphere, causing the problems that are well known to all of us.

Another drawback posed by these catalytic silencers lies in that after a given mileage they must be replaced and the relative cost is rather high.

It is also known that prototypes of exhaust gas cleaning devices have been successively developed which ensure more effective purification. The above mentioned devices use a given number of filters for the exhaust gases, whose drawback lies in that they increase the complexity of the device.

The complexity mentioned above has up to now made it impossible to apply said devices on a large scale to vehicles provided with internal combustion engines, which are the most widespread and on which it is important to intervene in order to limit atmospheric pollution.

Furthermore, the above mentioned filters pose a further drawback, constituted by the fact that they reduce, more or less, the useful power of the vehicles.

A further drawback is represented by the need to periodically clean or replace the filters, bearing the corresponding maintenance costs.

*Document* EP 1 122 105 *disclosed* a *system for purifying exhaust fumes, in which the fumes are directed through a liquid for purification.*

The present invention intends to overcome and eliminate the limitations and drawbacks described above.

In fact, it is a first object of the invention to provide an exhaust gas cleaning device that can be applied on a large scale on most vehicles with internal combustion engine instead of the traditional silencer.

It is a second object of the invention to obtain a practically complete purification of the exhaust gases.

It is a further object of the invention to ensure that said cleaning device is simple to carry out, thus drastically reducing its production costs.

It is another object of the invention to eliminate the need to periodically replace the device due to its inefficiency.

Finally, it is an additional object of the invention to provide a cleaning device that when applied to motor vehicles doesn't cause a considerable reduction in the useful power of the vehicle.

The objects mentioned above have been achieved through the construction of an exhaust gas cleaning device according to the main claim.

The cleaning device that is the subject of the invention, particularly suited to be used in vehicles with internal combustion engine, comprises a container provided with an inlet duct for said exhaust gases and with an outlet duct for the purified gases.

The container comprises a first chamber containing a purifying liquid whose surface is always below the inlet duct, which communicates with a diffuser element suited to convey the gases to be purified below the surface of the liquid.

The same container comprises also a second chamber communicating with the outlet duct.

The above mentioned first and second chamber are separated from each other, inside the container, by an impermeable partition provided with a communication opening between the two chambers and located above the surface of the purifying liquid.

The objects described above will be highlighted in greater detail in the description of a first preferred embodiment of the cleaning device preferably intended for motor vehicles, as well as of a second preferred embodiment of the same device intended in particular for motorcycles.

The first preferred embodiment of the invention is schematically illustrated in the first two tables of drawings attached hereto, wherein:
- Figure 1 shows a perspective view of the cleaning device, closed by its cover;
- Figure 2 shows the same device, stripped down in its two essential parts: base and cover;
- Figure 3 shows the base with its internal components;
- Figure 4 shows the diffuser element as an internal component of the base. The second preferred embodiment of the invention is shown in the third table of drawings, wherein:
- Figure 5 shows a perspective view of the outside of the cleaning device;
- Figure 6 is a phantom view of its internal composition;
- Figure 7 shows in greater detail the internal components of the same device.

Preferably, the external shape of the cleaning device that is the subject of the invention is substantially the same as that of the traditional silencers currently used in motor vehicles.

In this way, to advantage, the device of the invention is suitable for replacing the traditional silencers, with no need for particular modifications to be made on the vehicles already in use, and with no need to introduce further complex elements in the construction of new motor vehicles.

It is clear, however, that the device that is the subject of the invention can have any shape, compatibly with the manufacturer's needs.

The cleaning device comprises a container **1** that is provided with an inlet duct **2** for the exhaust gases and with an outlet duct **3** for the purified gases.

Said inlet and outlet ducts are respectively jointed with the internal combustion engine and with the exhaust pipe of the vehicle.

The container **1** will preferably and usefully consist of the base **11** and the corresponding cover **12.**

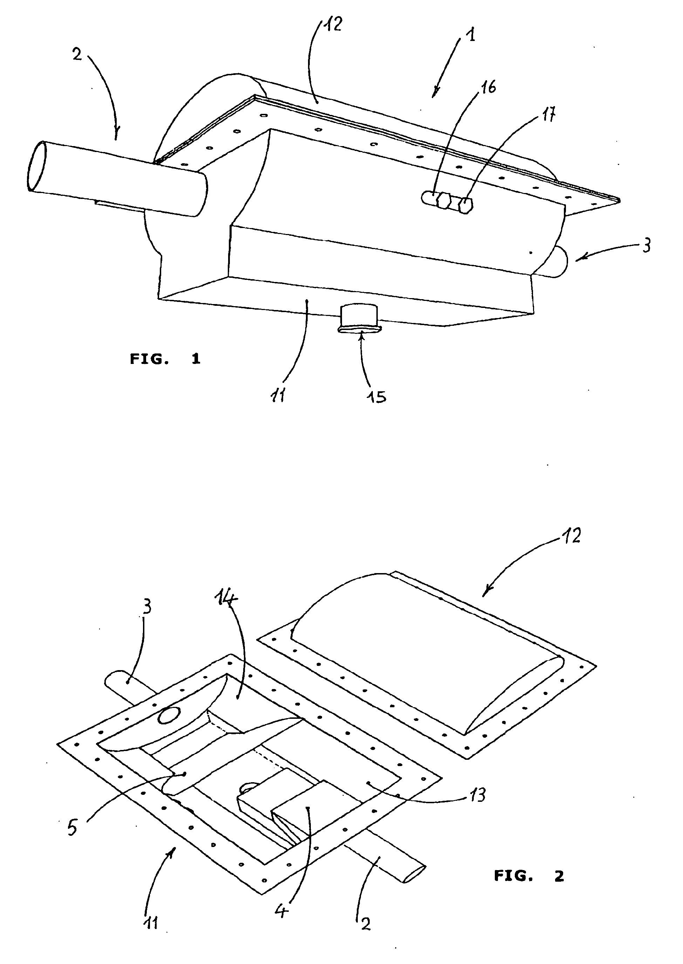

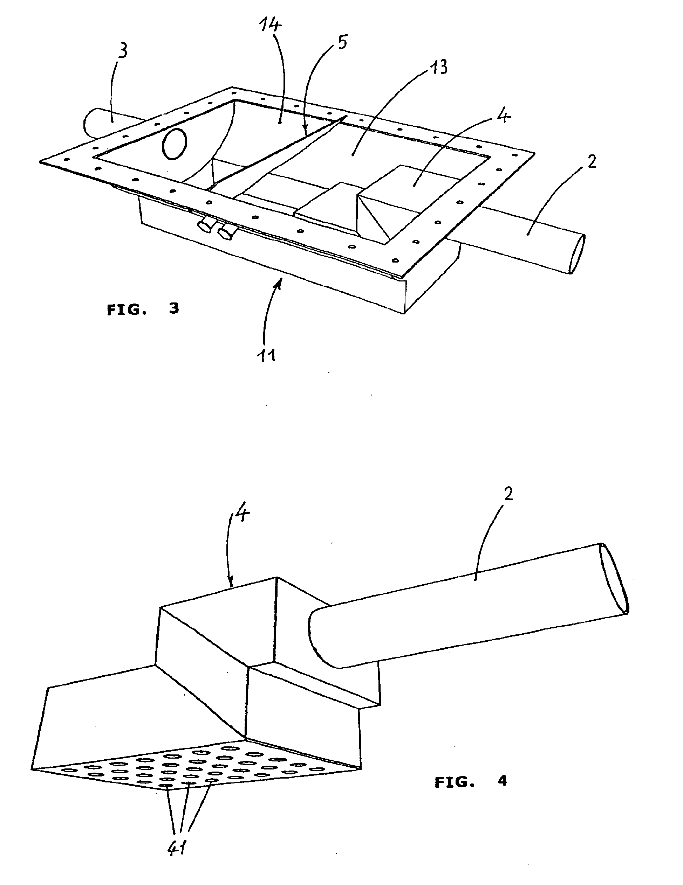

The internal components of the base **11** are shown as a whole, both in Figure 2 and more clearly in Figure 3.

The base **11** together with its cover **12** defines, inside the container **1,** the first chamber **13** containing a purifying liquid (not illustrated herein), through which the exhaust gas coming from the inlet duct **2** is scrubbed in order to purify it.

The level of said liquid in relation to the bottom of the base **11** will be such that its surface is always below the above mentioned inlet duct **2,** even when the motor vehicle runs down a very steep slope. The same inlet duct **2** communicates with the diffuser element **4** suited to convey the gases to be purified below the surface of the liquid, and this in any running condition of the vehicle.

The container **1** also comprises the second chamber **14** that is empty and communicates with said outlet duct **3,** connected to the exhaust pipe, as explained above.

The second chamber **14** is preferably but not necessarily provided with an inert silencer means that has only the function of lowering the engine's noise level.

The above mentioned first chamber **13** and second chamber **14** are separated from each other, inside the container **1,** by the partition **5** made of a material that is impermeable to the purifying liquid, so that there is no passage of liquid from the first chamber **13** to the second chamber **14.**

The upper part of the partition **5** is separated from the cover **12,** in such a way as to define a communication opening between the two chambers that allows the passage of the purified gases, above the partition, from the first to the second chamber.

The most important component present inside the base **11** is the diffuser element **4,** which can have various shapes but substantially of the type shown separately in Figure 4.

The diffuser element **4** is provided with a plurality of outlet holes **41** for the exhaust gases that are constantly covered by the purifying liquid.

According to the invention, the holes **41** are distributed according to a horizontal plane.

The holes arranged as described above cause the diffusion of the exhaust gas on a very wide area, in such a way as to involve the maximum volume of liquid possible and thus efficiently exploit its purifying effect.

The mentioned efficiency of the device of the invention advantageously makes it possible to limit the necessary quantity of purifying liquid and, therefore, the overall dimensions of the device itself.

Furthermore, the wide surface available makes it possible to provide for a high number of small holes, facilitating the gas outflow and thus achieving the object of avoiding a considerable decrease in the engine's performance levels. At the same time, the reduced size of the holes **41** makes it possible to divide the gas flow into a plurality of small bubbles that are advantageously and effectively diffused in the liquid volume.

Furthermore, the holes **41** are preferably directed towards the bottom of the base **11** of the container.

This makes it possible to lengthen the path of the exhaust gases, which in fact are forced to flow downwards before flowing up again, with the advantage of favouring the purification process.

The distance between the drilled surface of the diffuser element **4** and the bottom of the base **11** is the minimum distance required to avoid hindering the outflow if the exhaust gas.

Advantageously, a reduced distance between the holes **70** and the bottom of the base **11** allows the purifying function of the liquid layer to be exploited as much as possible, as the path of the exhaust gas through the liquid is lengthened. Furthermore, to advantage, keeping a minimum distance means preventing the holes **41** from clogging because of the deposits resulting from the gas purification process that accumulate on the bottom of the container.

The applicant has carried out practical tests on cleaning devices with shape and size analogous to those commonly used in motor vehicles, that is, with height included between 200 and 300 mm.

Said tests have shown that the best balance between the purifying action and the decrease in the engine's performance levels is obtained when the above mentioned distance is included between 20 and 30 mm.

As to the shape and arrangement of the diffuser, they are preferably such that substantially one half of the external surface of the diffuser emerges from the liquid.

In this way, one part of the diffuser functions as a counter-current heat exchanger between the hot exhaust gases inside the diffuser and the gases scrubbing above the level of the liquid, which are partially cooled due to the passage through the liquid itself.

The pre-cooling of the exhaust gases that is obtained in this way favours gas purification, thus achieving one of the objects of the invention.

In particular, the temperature decrease limits gas turbulence in the liquid and thus favours particulate precipitation.

Furthermore, since the colder gas has higher specific volume, its speed of flow up in the liquid is reduced and consequently its time of permanence in the liquid increases, thus improving the efficiency of the purification effect.

In order to obtain the effect described, the diffuser has a "crank" configuration, of the type shown in Figure 4.

More precisely, the diffuser comprises a first section with mainly horizontal development, in which the inlet duct **2** ends, and with a second section with mainly horizontal development, in which the above mentioned holes 70 are obtained.

The two sections described above are connected at their ends by an intermediate section with mainly vertical development.

Most of the external surface of the first section emerges from the liquid, while most of the external surface of the second section is immersed in the liquid. Advantageously, the winding shape of the diffuser lengthens the path of the exhaust gas and increases its turbulence, thus favouring its cooling. Furthermore, the flow section of the diffuser is preferably larger than that of the inlet duct **2,** which therefore constitutes an expansion area for the exhaust gases.

Advantageously, the expansion favours the turbulence of the exhaust gases in the diffuser and therefore increases heat exchange with cold gases.

The device that is the subject of the invention is preferably provided with a drain hole with plug **15,** as shown in Figure 1.

Advantageously, said drain hole allows the purifying liquid to be periodically discharged together with the deposits present on the bottom (every time the vehicle is put in for a MOT).

The introduction of new liquid in the container **1** then takes place through the inlet opening **16,** preferably with the vehicle on level ground.

The possibility to change the purifying liquid makes it possible to avoid changing the cleaning device and to limit maintenance, thus achieving another object of the invention.

It is also advisable to provide a slit **17,** visible in Figure 1, that makes it possible to check that the level of the liquid is included between a given minimum and a given maximum level.

As to the partition **5,** this is preferably a plate arranged so that it is incident in relation to the overall direction identified by the exhaust gas flow through the device **1.**

The plate is preferably inclined in relation to the general direction of the gases, so that the communication opening between the two chambers is positioned backward, towards the inlet duct **2.**

The arrangement just described forces the gas to flow along a winding path that touches the first section of the diffuser element, in such a way as to advantageously favour heat exchange.

A second preferred embodiment of the invention features a different geometry, compatible with application on motorcycles with internal combustion engine. Obviously, notwithstanding the change in the shape of the device, the internal composition of the device is substantially equivalent to that of the embodiment described above.

The preferred embodiment of the invention for this second class of vehicles is the one illustrated in Figures from 5 to 7.

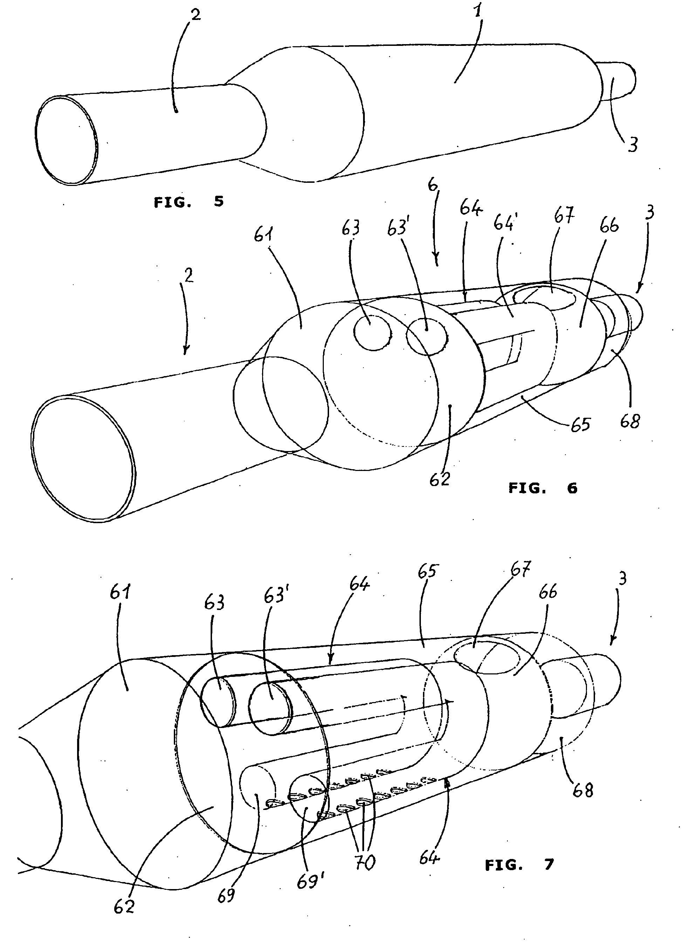

In particular, Figure 5 shows that the cleaning device usefully has the typical external shape of a common silencer for motorcycles.

In the same cleaning device it is possible to identify, as defined above, the inlet duct **2** for the exhaust gases and the outlet duct **3** for the purified gases, as well as the central container, indicated herein by **6.**

The successive Figure 6 shows a phantom view of the inside of the container **6,** where it is possible to observe the presence of an expansion area **61** for the gases introduced through the inlet duct **2,** delimited by the first disc **62.**

In the expansion area **61** high turbulence of the exhaust gases is obtained, which advantageously favours heat exchange between the hot gases and the purified gases that touch the opposite side of the first disc **62.**

Said first disc **62** is also preferably provided with one pair of holes **63** and **63'** communicating with the corresponding two U-shaped pipes **64** and 64', arranged inside a first chamber **65** of the container **6.**

Said first chamber **65** ends with the second disc **66** provided on its upper part with the communication opening **67,** through which the purified gases pass into a second chamber of the container, indicated herein by **68,** in order to be released in the air through the outlet duct **3.**

This therefore substantially takes place analogously to what happens in the cleaning device to be applied to motor vehicles as described above and illustrated in the figures.

The construction differences of the embodiment for motorcycles are better highlighted in Figure 7.

In Figure 7 it is possible to observe in particular the structure of the two U-shaped pipes **64** and **64'** arranged inside the first chamber **65** and closed at their lower ends **69** and **69'** in such a way as to communicate with the first chamber **65** exclusively through the plurality of holes **70.**

In particular, a first upper section of the pipes **64** and **64'** is substantially horizontal and most of it emerges from the liquid, while most of a second lower section is immersed in it and contains the holes **70.**

Said holes **70** are in a lower position in said second section of each one of the two U-shaped pipes **64** and **64',** so that in any situation they are below the surface of the purifying liquid, which is not illustrated in Figure 7 but is in any case present to a suitable level inside said first chamber **65.**

In particular, said level must not be exceeded, so that the liquid does not overflow, through the opening **67,** from the first chamber **65** to the second chamber **68;** and this in any situation of normal use of the motorcycle.

It is clear that, owing to their shape, the U-shaped pipes hinder the return of the purifying liquid towards the inlet duct **2** even when the cleaning device is very inclined.

Therefore, advantageously, the device is particularly suited to be installed on motorcycles, where due to lack of space the silencer must often be arranged in an inclined position.

It is thus clear that the U-shaped configuration makes it possible to make pipes whose length is practically twice the length of the first chamber **65,** thus favouring the exhaust gas cooling process.

Therefore, said U-shaped configuration advantageously allows to obtain a compact device, compatible with the small spaces available in motorcycles.

The periodic replacement of the purifying liquid will advantageously take place through apposite drain and feed holes for the liquid itself, not indicated herein as they are analogous to those defined above in relation to the application of the cleaning device to motor vehicles.

The composition of the purifying liquid is such as to be the most effective for the desired purifying functions.

Said liquid is preferably water which, advantageously, has a high purifying power.

The addition of salt advantageously makes it possible to reduce the solidification temperature and to increase the boiling temperature.

In construction variants of the invention, the purifying liquid is re-refined motor oil which, though having lower purifying power than water, advantageously features a lower solidification temperature and a higher boiling temperature compared to water.

Obviously, this liquid may contain substances suited to fix the noxious and non-noxious particles present in the exhaust gases, independently of the engine being an Otto cycle or a diesel engine.

Where technical features mentioned in any claim are followed by reference signs, those reference sings have been included for the sole purpose of increasing the intelligibility of the claims and accordingly such reference signs do not have any limiting effect on the interpretation of each element identified by way of example by such reference signs.

## Claims

1. Exhaust gas cleaning device, particularly suited to be used in internal combustion engines, comprising a container (1 ; 6) provided with an inlet duct (2) for said exhaust gases and with an outlet duct (3) for the purified gases, said container (1; 6) comprising a first chamber (13; 65) communicating with said inlet duct and containing a purifying liquid whose surface is always below said inlet duct (2), and a second chamber (14; 68) communicating with said outlet duct (3), said inlet duct communicating with at least one diffuser element (4; 64; 64') arranged in said first chamber (13; 65) and provided with a plurality of holes (41; 70) distributed according to a horizontal plane, suited to convey the exhaust gases below said surface of said liquid, **characterized in that** said first chamber and said second chamber are separated from each other, inside said container (1; 6), by an impermeable partition (5; 66) configured so as to prevent said liquid to pass from said first chamber (13; 65) to said second chamber (14; 68), and provided with one opening (67) that places the two chambers in communication and is located in the upper part of said impermeable partition (5; 66) and above the surface of said purifying liquid so as to allow the passage of the purified gas above said partition (5; 66) from the first chamber (13; 65) to the second chamber (14; 68).

2. Device according to claim 1), **characterized in that** said holes (41; 70) are directed towards the bottom of said container (1; 6).

3. Device according to any of the preceding claims 1) or 2), **characterized in that** said diffuser element (4) comprises two sections with mainly horizontal development and one intermediate section with mainly vertical development that connects the ends of said horizontal sections, wherein a first one of said horizontal sections has most of its external surface emerging from said liquid and one second of said horizontal sections has most of its external surface immersed in said liquid.

4. Device according to claim 3), **characterized in that** said holes (70) are distributed on the lower surface of said second horizontal section of said diffuser element (4; 64; 64').

5. Device according to any of the preceding claims, **characterized in that** said impermeable partition (5) is a plate arranged so that it is incident in relation to the overall direction of the flow of said gases through said device.

6. Device according to claim 5), **characterized in that** said plate is inclined in relation to said overall direction of the gases so that said opening is positioned backwards, towards said inlet duct (2).

7. Device according to any of the claims 5) or 6), **characterized in that** said diffuser element comprises at least one U-shaped pipe (64) having one first end (63) that communicates with said inlet duct (2) and closed at one second end (69) opposite said first end (63).

8. Device according to any of the preceding claims, **characterized in that** it comprises at least one expansion area (61) connected to said inlet duct (2) and provided with a flow section larger than the section of said inlet duct (2), the external surface that delimits said expansion area (61) being at least partially in contact with said purified gases.

9. Device according to any of the preceding claims, **characterized in that** the level of said purifying liquid is such as to cover said plurality of outlet holes (41; 70) for the exhaust gases, even when the motor vehicles on which said device is installed run on very steep slopes.

10. Device according to any of the preceding claims, **characterized in that** the level of said purifying liquid is such as to remain below said opening (67) belonging to said partition (66), even when the motor vehicles on which said device is installed run on very steep slopes.

11. Device according to any of the preceding claims, **characterized in that** said container (1) comprises a bottom (11) provided with a drain hole (15) for said purifying liquid and for the deposits resulting from the purification of said gases.

12. Device according to any of the preceding claims, **characterized in that** said container (1) comprises an opening (16) for the introduction of said purifying liquid.

13. Device according to any of the preceding claims, **characterized in that** said container comprises a slit (17) through which it is possible to check visually the level of said purifying liquid.

14. Device according to any of the preceding claims, **characterized in that** said liquid is salt water.

15. Device according to any of the preceding claims, **characterized in that** said liquid is a lubricant oil.

## Patentansprüche

1. Abgasreinigungsvorrichtung, insbesondere geeignet zur Verwendung in Verbrennungskraftmaschinen, umfassend einen Behälter (1; 6), der mit einer Einlassleitung (2) für die Abgase und einer Auslassleitung (3) für die gereinigten Gase ausgestattet ist, wobei der Behälter (1; 6) eine erste Kammer (13; 65), die mit der Einlassleitung kommuniziert und eine Reinigungsflüssigkeit enthält, deren Spiegel immer unter der Einlassleitung (2) liegt, und eine zweite Kammer (14; 68), die mit der Auslassleitung (3) kommuniziert, umfasst, wobei die Einlassleitung mit zumindest einem Verteilerelement (4; 64; 64') kommuniziert, das in der ersten Kammer (13; 65) angeordnet ist und eine Vielzahl an Löchern (41; 70) aufweist, die einer horizontalen Ebene nach verteilt sind und dazu geeignet sind, die Abgase unter den Spiegel der Flüssigkeit zu leiten, **dadurch gekennzeichnet, dass** die erste Kammer und die zweite Kammer im Inneren des Behälters (1; 6) durch ein undurchlässiges Trennelement (5; 66) voneinander getrennt sind, das derart konfiguriert ist, dass es verhindert, dass die Flüssigkeit von der ersten Kammer (13; 65) in die zweite Kammer (14; 68) tritt, und mit einer Öffnung (67) ausgestattet ist, die die beiden Kammern in Kommunikation bringt und im oberen Teil des undurchlässigen Trennelements (5; 66) sowie oberhalb des Spiegels der Reinigungsflüssigkeit angeordnet ist, um es dem gereinigten Gas zu ermöglichen, oberhalb des Trennelements (5; 66) von der ersten Kammer (13; 65) in die zweite Kammer (14; 68) zu treten.

2. Vorrichtung nach Anspruch 1), **dadurch gekennzeichnet, dass** die Löcher (41; 70) auf den Boden des Behälters (1; 6) gerichtet sind.

3. Vorrichtung nach einem der vorangegangenen Ansprüche 1) oder 2), **dadurch gekennzeichnet, dass** das Verteilerelement (4) zwei Abschnitte von im Wesentlichen horizontaler Ausdehnung und einen Zwischenabschnitt von im Wesentlichen vertikaler Ausdehnung, der die Enden der horizontalen Abschnitte verbindet, umfasst, wobei der Großteil der Außenoberfläche eines ersten der horizontalen Abschnitte aus der Flüssigkeit herausragt und der Großteil der Außenoberfläche eines zweiten der horizontalen Abschnitte in der Flüssigkeit eingetaucht ist.

4. Vorrichtung nach Anspruch 3), **dadurch gekennzeichnet, dass** die Löcher (70) an der unterseitigen Oberfläche des zweiten horizontalen Abschnitts des Verteilerelements (4; 64; 64') verteilt sind.

5. Vorrichtung nach einem der vorangegangenen Ansprüche, **dadurch gekennzeichnet, dass** das undurchlässige Trennelement (5) eine Platte ist, die derart angeordnet ist, dass sie in Bezug auf die Gesamtrichtung der Strömung der Gase durch die Vorrichtung inzident ist.

6. Vorrichtung nach Anspruch 5), **dadurch gekennzeichnet, dass** die Platte in Bezug auf die Gesamtrichtung der Gase geneigt ist, sodass die Öffnung nach hinten versetzt, zur Einlassleitung (2) hin, angeordnet ist.

7. Vorrichtung nach einem der Ansprüche 5) oder 6), **dadurch gekennzeichnet, dass** das Verteilerelement zumindest ein U-förmiges Rohr (64) umfasst, das ein erstes Ende (63) aufweist, welches mit der Einlassleitung (2) kommuniziert, und an einem zweiten Ende (69), das dem ersten Ende (63) gegenüberliegt, verschlossen ist.

8. Vorrichtung nach einem der vorangegangenen Ansprüche, **dadurch gekennzeichnet, dass** sie zumindest einen Ausdehnungsbereich (61) umfasst, der mit der Einlassleitung (2) verbunden ist und einen größeren Strömungsquerschnitt als der Querschnitt der Einlassleitung (2) aufweist, wobei die Außenoberfläche, die den Ausdehnungsbereich (61) abgrenzt, zumindest teilweise mit den gereinigten Gasen in Kontakt ist.

9. Vorrichtung nach einem der vorangegangenen Ansprüche, **dadurch gekennzeichnet, dass** der Pegel der Reinigungsflüssigkeit derart ist, dass er die Vielzahl der Auslasslöcher (41; 70) für die Abgase auch dann bedeckt, wenn die Kraftfahrzeuge, in denen die Vorrichtung eingebaut ist, auf sehr starken Steigungen fahren.

10. Vorrichtung nach einem der vorangegangenen Ansprüche, **dadurch gekennzeichnet, dass** der Pegel der Reinigungsflüssigkeit derart ist, dass er auch dann unterhalb der Öffnung (67), die zur Trennwand (66) gehört, verbleibt, wenn die Kraftfahrzeuge, in denen die Vorrichtung eingebaut ist, auf sehr starken Steigungen fahren.

11. Vorrichtung nach einem der vorangegangenen Ansprüche, **dadurch gekennzeichnet, dass** der Behälter (1) einen Boden (11) umfasst, der mit einer Ablauföffnung (15) für die Reinigungsflüssigkeit und für die Ablagerungen, die sich aus der Reinigung der Gase ergeben, ausgestattet ist.

12. Vorrichtung nach einem der vorangegangenen Ansprüche, **dadurch gekennzeichnet, dass** der Behälter (1) eine Öffnung (16) zum Einbringen der Reinigungsflüssigkeit umfasst.

13. Vorrichtung nach einem der vorangegangenen Ansprüche, **dadurch gekennzeichnet, dass** der Behälter einen Schlitz (17) umfasst, durch den es möglich ist, eine Sichtprüfung des Pegels der Reinigungsflüssigkeit vorzunehmen.

14. Vorrichtung nach einem der vorangegangenen Ansprüche, **dadurch gekennzeichnet, dass** die Flüssigkeit Salzwasser ist.

15. Vorrichtung nach einem der vorangegangenen Ansprüche, **dadurch gekennzeichnet, dass** die Flüssigkeit ein Schmieröl ist.

## Revendications

1. Dispositif épurateur de gaz d'échappement, apte particulièrement à être utilisé dans des moteurs à combustion interne, comprenant un conteneur (1; 6) doté d'un tuyau d'entrée (2) pour lesdits gaz d'échappement et d'un tuyau de sortie (3) pour les gaz épurés, ledit conteneur (1; 6) comprenant une première chambre (13; 65) communiquant avec ledit tuyau d'entrée et contenant un liquide d'épuration dont la surface est toujours au-dessous dudit tuyau d'entrée (2), et une deuxième chambre (14; 68) communiquant avec ledit tuyau de sortie (3), ledit tuyau d'entrée communiquant avec au moins un élément diffuseur (4; 64; 64') positionné dans ladite première chambre (13; 65) et doté d'une pluralité de trous (41 ; 70) distribués selon un plan horizontal, indiqués pour transporter les gaz d'échappement au-dessous de ladite surface dudit liquide, **caractérisé en ce que** ladite première chambre et ladite deuxième chambre sont séparées l'une de l'autre, à l'intérieur dudit conteneur (1; 6), au moyen d'une cloison imperméable (5; 66) configurée de manière à empêcher que ledit liquide passe de ladite première chambre (13; 65) à ladite deuxième chambre (14; 68), et dotée d'une ouverture (67) qui met les deux chambres en communication et se trouve sur la partie supérieure de ladite cloison imperméable (5; 66) et au-dessus de la surface dudit liquide d'épuration de manière à consentir le passage des gaz épurés au-dessus de la ladite cloison (5; 66) de ladite première chambre (13; 65) à ladite deuxième chambre (14; 68).

2. Dispositif selon la revendication 1), **caractérisé en ce que** lesdits trous (41 ; 70) sont tournés vers le fond dudit conteneur (1 ; 6).

3. Dispositif selon l'une quelconque des revendications précédentes 1) ou 2), **caractérisé en ce que** ledit élément diffuseur (4) comprend deux sections avec développement essentiellement horizontal et une section intermédiaire avec développement essentiellement vertical qui relie les extrémités desdites sections horizontales, où une première desdites sections horizontales présente la plupart de sa surface externe émergeant dudit liquide et une deuxième desdites sections horizontales présente la plupart de sa surface externe plongée dans ledit liquide.

4. Dispositif selon la revendication 3), **caractérisé en ce que** lesdits trous (70) sont distribués sur la surface inférieure de ladite deuxième section horizontale dudit élément diffuseur (4; 64; 64').

5. Dispositif selon l'une quelconque des revendications précédentes, **caractérisé en ce que** ladite cloison imperméable (5) est une plaque disposée de manière incidente par rapport à la direction globale du débit desdits gaz à travers ledit dispositif.

6. Dispositif selon la revendication 5), **caractérisé en ce que** ladite plaque est inlcinée par rapport à ladite direction globale desdits gaz de manière à ce que ladite ouverture soit reculée vers ledit tuyau d'entrée (2).

7. Dispositif selon l'une quelconque des revendications 5) ou 6), **caractérisé en ce que** ledit élément diffuseur comprend au moins un tuyau en U (64) ayant une première extrémité (63) qui communique avec ledit tuyau d'entrée (2) et fermé sur une deuxième extrémité (69) opposée à ladite première extrémité (63).

8. Dispositif selon l'une quelconque des revendications précédentes, **caractérisé en ce qu'**il comprend au moins une zone d'expansion (61) reliée audit tuyau d'entrée (2) et dotée d'une section de débit plus large que la section dudit tuyau d'entrée (2), la surface externe qui délimite ladite zone d'expansion (61) étant au moins partiellement en contact avec lesdits gaz épurés.

9. Dispositif selon l'une quelconque des revendications précédentes, **caractérisé en ce que** le niveau dudit liquide d'épuration est tel à couvrir ladite pluralité de trous de sortie (41; 70) pour les gaz d'échappement, également quand les moyens motorisés sur lesquels ledit dispositif est installé roulent sur des pentes très raides.

10. Dispositif selon l'une quelconque des revendications précédentes, **caractérisé en ce que** le niveau dudit liquide d'épuration est tel à rester au-dessous de ladite ouverture (67) appartenant à ladite cloison (66), même quand le moyens motorisés sur lesquels ledit dispositif est installé roulent sur des pentes très raides.

11. Dispositif selon l'une quelconque des revendications précédentes, **caractérisé en ce que** ledit conteneur (1) comprend un fond (11) doté d'un trou de drainage (15) pour ledit liquide d'épuration et pour les dépôts résultant de l'épuration desdits gaz.

12. Dispositif selon l'une quelconque des revendications précédentes, **caractérisé en ce que** ledit conteneur (1) comprend une ouverture (16) pour l'introduction dudit liquide d'épuration.

13. Dispositif selon l'une quelconque des revendications précédentes, **caractérisé en ce que** ledit conteneur comprend une fente (17) à travers laquelle il est possibile de contrôler visuellement le niveau dudit liquide d'épuration.

14. Dispositif selon l'une quelconque des revendications précédentes, **caractérisé en ce que** ledit liquide est de l'eau salée.

15. Dispositif selon l'une quelconque des revendications précédentes, **caractérisé en ce que** ledit liquide est une huile lubrifiante.
